# EUROPÄISCHE PATENTANMELDUNG

(11) **EP 4 644 719 A1**
(43) Veröffentlichungstag der Anmeldung: **05.11.2025**
(21) Anmeldenummer: 25173025.5
(22) Anmeldetag: 28.04.2025
(51) Int. Cl.: F16D 11/00, F16D 27/108, F16D 27/118

(54) **ELEKTROMAGNETISCH SCHALTBARE FORMSCHLUSSKUPPLUNG**

(30) Priorität: 03.05.2024 DE 102024112563
(71) Anmelder: HOERBIGER Antriebstechnik Holding GmbH, 86956 Schongau (DE)
(72) Erfinder: BINDER, Jürgen, 86956 Schongau (DE); ECHTLER, Peter, 86956 Schongau (DE); DEMPFLE, Andreas, 86956 Schongau (DE); FÜRGUTH, Werner, 86956 Schongau (DE); VOELK, Wolfgang, 86956 Schongau (DE); BUTORIN, Oleg, 86956 Schongau (DE); KUCHAREK, Sebastian, 86956 Schongau (DE); LAUTENSACH, Marco, 86956 Schongau (DE)
(74) Vertreter: Prinz & Partner mbB

(57) **Zusammenfassung**

Es wird eine elektromagnetisch schaltbare Formschlusskupplung (10) gezeigt, mit einer Schaltmuffe (16), die drehfest auf einer Welle (12) angeordnet ist und entlang der Welle linear zwischen einer Einkupplungsposition und einer Auskupplungsposition verschiebbar ist, einem Kupplungskörper (20), der koaxial zur Welle (12) ausgerichtet ist, und einem Stator (26) mit wenigstens einer bestrombaren Antriebsspule (30) zur Verstellung der Schaltmuffe (16) entlang der Welle (12), wobei in der Einkupplungsposition ein Formschluss zwischen der Schaltmuffe (16) und dem Kupplungskörper und damit eine Drehverbindung zwischen der Welle (12) und dem Kupplungskörper vorliegt. Außerdem umfasst die Formschlusskupplung (10) eine angrenzend an die Schaltmuffe (16) angeordnete, stationäre Sensorvorrichtung (42), die wenigstens einen Hall-Sensor und wenigstens zwei den wenigstens einen Hall-Sensor magnetisch einschließende Magnete umfasst, die bleibend ortsfest zum wenigstens einen Hall-Sensor sind, wobei die Magnete zur Schaltmuffe (16) weisen und zueinander entgegengesetzt gepolt sind. Dabei grenzt die Sensorvorrichtung (42) in einer radialen Richtung mit einem radialen Spalt beabstandet zur Schaltmuffe (16) an diese an, sodass eine Axialbewegung der Schaltmuffe (16) über eine Reduzierung des radialen Spalts vom Hall-Sensor detektiert wird.

## Beschreibung

Die Erfindung betrifft eine elektromagnetisch schaltbare Formschlusskupplung.

Soll temporär Drehmoment von einer Welle auf eine andere, koaxial dazu ausgerichtete Welle übertragen werden, ohne dass diese beiden Wellen dauerhaft verbunden werden, kommen typischerweise Kupplungen zum Einsatz. Hierbei wird zwischen reibschlüssigen und formschlüssigen Kupplungen unterschieden. Die vorliegende Erfindung betrifft formschlüssige Kupplungen, die hier als Formschlusskupplungen bezeichnet werden. Zu den Formschlusskupplungen zählen bspw. Zahnkupplungen sowie Klauenkupplungen.

Für Formschlusskupplungen werden häufig verschiebbare Schaltmuffen eingesetzt. Diese weisen eine oder auch mehrere verschiedene Verzahnungen auf, welche in Gegenverzahnungen greifen, sodass ein Formschluss entsteht, über den Drehmoment von einer ersten Welle auf eine zweite Welle übertragen werden kann.

Aus dem Stand der Technik sind elektromagnetische Kupplungen bekannt, bei denen die Verstellung der Schaltmuffe über eine Antriebsspule erfolgt, die eine magnetische Kraft auf die Schaltmuffe ausübt. Bei derartigen Kupplungen kann die Schaltmuffe ausgehend von einer Auskupplungsposition in eine Richtung bewegt werden, um die Schaltmuffe in Eingriff mit einem Kupplungskörper zu bringen. Man spricht dabei von einer einseitigen Kupplung.

Außerdem sind zweiseitige Kupplungen bekannt, bei denen die Schaltmuffe ausgehend von einer Auskupplungsposition in entgegengesetzte Richtungen bewegt werden kann, um die Schaltmuffe in Eingriff mit unterschiedlichen, axial beabstandeten Kupplungskörpern zu bringen.

Insbesondere bei elektromagnetisch schaltbaren Formschlusskupplungen ist eine Steuerung vorgesehen, die eine Verschiebung der Schaltmuffe über Steuerbefehle steuert. Für einen bestmöglichen Kupplungsverlauf ist es dabei notwendig, die aktuelle Position der Schaltmuffe, welche auch als Kupplungsposition bezeichnet wird, zu kennen. Dies liegt daran, dass für jeden an die elektromagnetisch schaltbare Formschlusskupplung zu übertragenden Steuerbefehl zunächst der aktuelle Kupplungszustand analysiert werden sollte, sodass die Steuerung jederzeit die Position der Schaltmuffe abfragen können sollte.

Im Stand der Technik wird der Schaltzustand oder auch die Kupplungsposition der Schaltmuffe über indirekte Messungen bestimmt, beispielsweise durch den Stromzustand des Stators oder die Drehzahl der zu verbindenden Wellen.

Alternativ kann ein Sensor in einem Gehäuse der Formschlusskupplung integriert werden. Dabei handelt es sich üblicherweise ebenfalls um eine indirekte Messung, die über ein zusätzliches Betätigungsbauteil wie bspw. eine Scheibe, die mit einem verschiebbaren Teil, insbesondere der Schaltmuffe, gekoppelt ist, durchgeführt wird.

Um die Endlage der Schaltmuffe, das heißt eine Einkupplungs- oder Auskupplungsposition der Schaltmuffe zu bestimmen, können auch Schalter eingesetzt werden. Der Schalter wird dabei durch ein extra vorgesehenes Betätigungsteil betätigt, wenn die Schaltmuffe sich in der Einkupplungsposition befindet.

Alternativ zu einem Schalter kann auch ein Wegmesssystem eingesetzt werden, welches ebenfalls über ein zusätzliches Bauteil betätigt wird.

Somit zeichnen sich die im Stand der Technik bekannten Methoden zum Erfassen der Position der Schaltmuffe dadurch aus, dass es sich um indirekte Messungen handelt, die ein zusätzliches, abzutastendes oder betätigendes Bauteil benötigen. Eine direkte und genaue Bestimmung an der eigentlichen Kupplungsposition ist somit nicht möglich, sondern es werden immer zusätzliche Bauteile benötigt.

Hinzu kommt, dass die Erfassung der Position der Schaltmuffe üblicherweise in axialer Richtung stattfindet, sodass sich der benötigte Bauraum für die Formschlusskupplung erhöht.

Durch die zusätzlich benötigten Bauteile sowie den benötigten Bauraum erhöhen sich außerdem die Herstellkosten der Formschlusskupplung.

Außerdem benötigen diese Messmethoden oftmals eine genaue Kalibrierung des Sensors gegenüber der Messstelle, was üblicherweise sehr aufwendig und somit kostenintensiv ist.

Es ist daher eine Aufgabe der Erfindung, eine elektromagnetisch schaltbare Formschlusskupplung bereitzustellen, bei der die Bestimmung der Kupplungsposition über eine direkte Messung stattfindet. Es ist außerdem eine Aufgabe, den benötigten Bauraum sowie die Anzahl der benötigten Bauteile möglichst gering zu halten.

Diese Aufgabe wird erfindungsgemäß gelöst durch eine elektromagnetisch schaltbare Formschlusskupplung, mit einer Schaltmuffe, die drehfest auf einer Welle angeordnet ist und entlang der Welle linear zwischen einer Einkupplungsposition und eine Auskupplungsposition verschiebbar ist. Des Weiteren weist die Formschlusskupplung wenigstens einen Kupplungskörper, der koaxial zur Welle ausgerichtet ist, und einen Stator mit wenigstens einer bestrombaren Antriebsspule zur Verstellung der Schaltmuffe entlang der Welle auf, wobei in der Einkupplungsposition ein Formschluss zwischen der Schaltmuffe und dem Kupplungskörper und damit eine Drehverbindung zwischen der Welle und dem Kupplungskörper vorliegt. Die Formschlusskupplung umfasst außerdem eine angrenzend an die Schaltmuffe angeordnete, stationäre Sensorvorrichtung, die wenigstens einen Hall-Sensor und wenigstens zwei den wenigstens einen Hall-Sensor magnetisch einschließende Magnete umfasst, die bleibend ortsfest zum wenigstens einen Hall-Sensor sind, wobei die Magnete zur Schaltmuffe weisen und zueinander entgegengesetzt gepolt sind. Dabei grenzt die Sensorvorrichtung in einer radialen Richtung mit einem radialen Spalt beabstandet zur Schaltmuffe an diese an, sodass eine Axialbewegung der Schaltmuffe über eine Reduzierung des radialen Spalts vom Hall-Sensor detektiert wird.

Mit anderen Worten, wird wenigstens ein Hall-Sensor in einem Magnetfeld von zwei entgegengesetzt gepolten Magneten so in der Kupplung radial einwärts des Stators befestigt, dass der Hall-Sensor eine Veränderung im radialen Abstand zur Schaltmuffe erkennen kann, basierend auf diesen Daten eine Steuerung die Kupplungsposition der Schaltmuffe bestimmen kann. Da es sich um eine direkte Messung handelt, werden keine zusätzlichen Bauteile benötigt, wodurch die Herstellungskosten gesenkt werden. Außerdem sind Hall-Sensoren gängige Sensoren, die günstig erworben werden können und wenig Platz benötigen. Insbesondere in axialer Richtung wird nahezu kein zusätzlicher Bauraum benötigt, da der Hall-Sensor in einer radialen Richtung an die Schaltmuffe angrenzt. Insbesondere kann die genaue Position der Schaltmuffe ohne bzw. unabhängig vom Spulenstrom erfasst werden.

Zum Bestimmen der Position der Schaltmuffe wird also der Hall-Effekt genutzt. Das heißt, es wird eine Änderung einer elektrischen Spannung in einem stromdurchflossenen Leiter gemessen, der sich in einem Magnetfeld befindet. Durch die Änderung des Magnetfelds bei einer Verschiebung der Schaltmuffe kommt es genau zu solch einer Spannungsänderung.

Indem der Hall-Sensors magnetisch von wenigstens zwei entgegengesetzt gepolten Magneten eingeschlossen wird, kann der Einfluss des Magnetfelds der Antriebsspule, welcher zu unkontrollierten Änderungen des Hall-Effekts führen kann, verhindert werden. Die Magnete dienen dementsprechend dazu, den Hall-Sensor magnetisch abzuschirmen.

Zusätzlich kann durch diese Anordnung auf einen auf der Schaltmuffe befestigten Permanentmagneten verzichtet werden. Dadurch können die Produktionskosten deutlich gesenkt werden, da es sich bei einem für die Schaltmuffe geeigneten Permanentmagneten um eine ringförmige Sonderanfertigung handelt, was die Produktionskosten üblicherweise deutlich erhöht.

Vorzugsweise kann die Schaltmuffe auf der Außenseite eine der Sensorvorrichtung gegenüberliegende Schräge haben, die den Detektierbereich für die Sensorvorrichtung bildet und auf Seite der Schaltmuffe den radialen Spalt begrenzt, wobei sich durch die Schräge bei einer axialen Bewegung der Schaltmuffe die Breite des Spaltes verändert. Durch die Schräge auf der Außenseite der Schaltmuffe kann zu jeder Zeit die genaue Kupplungsposition der Schaltmuffe bestimmt werden, und nicht nur, ob sich die Schaltmuffe aktuell in der Einkupplungsposition oder in der Auskupplungsposition befindet.

Demnach entspricht der Abschnitt der Schaltmuffe, welcher die Schräge aufweist, vorzugsweise zumindest dem notwendigen Hub, das heißt, dem notwendigen Schaltweg, der Formschlusskupplung. Somit kann sichergestellt werden, dass durch jede Bewegung der Schaltmuffe eine Reduzierung bzw. Vergrößerung des radialen Spalts vom Hall-Sensor detektiert wird.

Gemäß einer Ausführungsform ist die Schräge durch einen konisch zulaufenden axialen Rand der Schaltmuffe gebildet.

Alternativ ist es auch vorstellbar, dass die Schaltmuffe anstatt einer Schräge Abstufungen aufweist, sodass die Position der Schaltmuffe in diskreten Schritten bestimmt werden kann.

Gemäß einer weiteren Ausführungsform umfasst die Sensorvorrichtung eine magnetische Kurzschlussbrücke, die an die Magneten an einem Ende angrenzt und diese magnetisch koppelt. Durch die Verwendung einer solchen Kurzschlussbrücke kann der Fluss des Magnetfelds gelenkt, d. h. der Fluss von einem zum anderen Magneten kann erhöht werden. Dadurch wird der Hall-Sensor besser von dem Magnetfeld des Stators abgeschirmt und das vom Hall-Sensor bereitgestellte Signal verstärkt, sodass eine insgesamt höhere Auflösung erreicht werden kann.

Gemäß einer bevorzugten Ausführungsform sind die wenigstens zwei Magnete an ihren der Schaltmuffe entfernten Enden durch die Kurzschlussbrücke magnetisch miteinander verbunden. Somit wird die Abschirmung des Hall-Sensors von dem magnetischen Feld der Antriebsspule nochmals verbessert, sodass unkontrollierte Änderungen des Hall-Effekts effektiv verhindert werden. Dementsprechend besteht die Kurzschlussbrücke vorzugsweise aus einem weichmagnetischen Werkstoff.

Gemäß einer Ausführungsform ist die Kurzschlussbrücke in ein erstes Brückenteil und ein zweites Brückenteil unterteilt. Dabei sind das erste Brückenteil und das zweite Brückenteil so angeordnet, dass zwischen den beiden Brückenteilen ein Spalt entsteht und der Hall-Sensor im Spalt zwischen dem ersten und dem zweiten Brückenteil angeordnet werden kann. Durch die Anordnung des Hall-Sensors zwischen den beiden Brückenteilen der Kurzschlussbrücke wird das Signal im Vergleich zu der Verwendung einer durchgängigen Kurzschlussbrücke nochmals verstärkt, sodass eine noch höhere Auflösung erreicht werden kann.

Gemäß einer bevorzugten Ausführungsform ist an jedem der Magneten auf dessen der geteilten Kurzschlussbrücke entfernten Ende ein weichmagnetisches Material vorgesehen. Auch dieses dient der Magnetflussführung, um das Signal des Hall-Sensors zu verstärken und ungewünschte Änderungen des Hall-Effekts aufgrund des vom Stator erzeugten Magnetfelds zu verhindern.

Gemäß einer alternativen Ausführungsform umfasst die Sensorvorrichtung wenigstens zwei Hall-Sensoren, wobei jedem der Hall-Sensoren ein Magnet zugeordnet ist, der an dem zugeordneten Hall-Sensor angrenzt. Auch durch diese Anordnung wird der Hall-Sensor von dem Magnetfeld der Antriebsspule abgeschirmt, sodass keine unkontrollierten Änderungen des Hall-Effekts die Messergebnisse des Hall-Sensors verfälschen.

Vorzugsweise grenzen die Hall-Sensoren an das der Schaltmuffe nahe Ende des jeweils zugeordneten Magneten an und liegen somit zwischen diesem und der Schaltmuffe. Somit kann die Entfernung zwischen dem Hall-Sensor und der Schaltmuffe möglichst geringgehalten werden, um eine möglichst genaue Messung zu erzielen, da mit zunehmender Entfernung zwischen Sensor und Schaltmuffe sich die Genauigkeit der Messung verringert. Insbesondere da die Kupplungswege bei elektromagnetisch schaltbaren Formschlusskupplungen eine Größenordnung von wenigen Millimetern haben, ist eine genaue Auflösung des Hall-Sensors extrem wichtig.

Gemäß einer Ausführungsform ist der wenigstens eine Hall-Sensor direkt oder über einen der wenigstens zwei Magnete auf einer Platine angebracht. Dies erleichtert die Befestigung der Sensorvorrichtung und ermöglicht ein direktes Weiterleiten der Sensorsignale zu einer Steuerung.

Die Magnete können parallel zueinander angeordnet sein und/oder auf derselben Seite einer Platine vorgesehen sein, die auch den Hall-Sensor umfasst. Durch eine parallele Anordnung der Magnete kann sichergestellt werden, dass die Magnete exakt gegenpolig angeordnet werden, der zur Abschirmung notwendige Magnetfluss erreicht wird und genaue Messungen durchgeführt werden.

Bei den Magneten kann es sich um Permanentmagnete oder um Elektromagnete handeln.

Gemäß einer Ausführungsform sind wenigstens zwei Sensorvorrichtungen vorgesehen, wobei die wenigsten zwei Sensorvorrichtungen in Umfangsrichtung zueinander versetzt angeordnet sind, wodurch eine ungleiche Verschiebung der Schaltmuffe, bspw. durch ein Kippen der Schaltmuffe, frühzeitig erkannt werden kann. Dementsprechend kann auch die Schaltmuffe so angesteuert werden, dass die Kippbewegung neutralisiert wird, oder es kann kurzzeitig schnell ausgekuppelt und wieder eingekuppelt werden.

Gemäß einer Ausführungsform ist die Sensorvorrichtung in einem Sensorgehäuse aufgenommen, wobei das Sensorgehäuse an einem Statorgehäuse angebracht ist.

Vorzugsweise ist der Schaltmuffe nur ein einziger Kupplungskörper zugeordnet, sodass die Sensorvorrichtung auf der dem Kupplungskörper entfernten axialen Seite der Schaltmuffe angeordnet ist. Dadurch können Bauraumprobleme verhindert werden, da der Sensor nicht zwischen dem Kupplungskörper und der Schaltmuffe oder direkt neben oder über dem Kupplungskörper angeordnet werden muss.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 eine Schnittdarstellung einer erfindungsgemäßen elektromagnetisch schaltbaren Formschlusskupplung mit einer Schaltmuffe in der Auskupplungsposition;
- Figur 2 eine Detailansicht der in Figur 1 gezeigten Formschlusskupplung im Bereich einer Sensorvorrichtung;
- Figur 3 eine Detailansicht der Sensorvorrichtung im Schnitt;
- Figur 4 eine weitere Ausführungsform der erfindungsgemäßen Formschlusskupplung mit zwei Sensorvorrichtungen im Schnitt;
- Figur 5 eine Draufsicht der in Figur 4 gezeigten Formschlusskupplung;
- Figur 6 eine perspektivische Detailansicht einer alternativen Sensorvorrichtung;
- Figur 7 eine schematische Darstellung der in Figur 5 gezeigten Sensorvorrichtung; und
- Figur 8 eine schematische Darstellung einer weiteren alternativen Ausführung der Sensorvorrichtung.

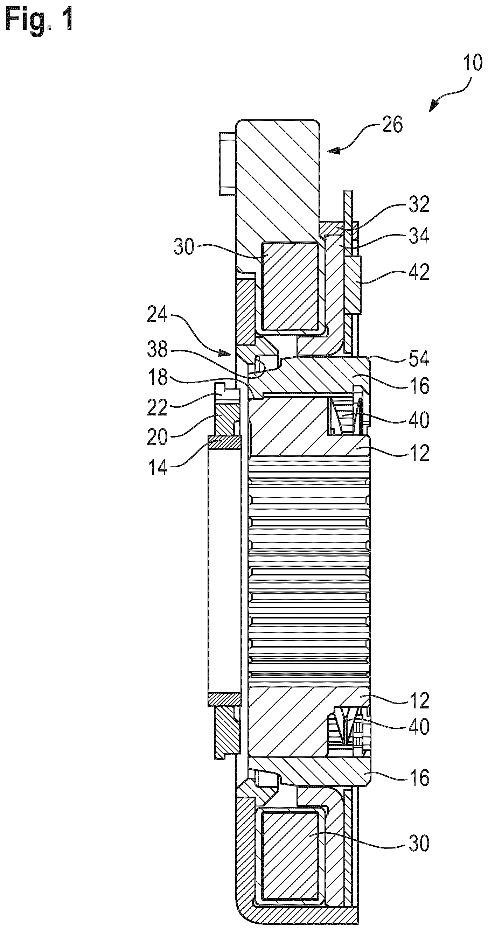

Figur 1 zeigt eine elektromagnetisch schaltbare Formschlusskupplung 10, die dazu dient, durch Öffnen und Schließen eine erste Welle 12 und eine koaxial zur ersten Welle 12 ausgerichtete zweite Welle 14 miteinander zu koppeln.

Bei der in Figur 1 gezeigten Formschlusskupplung 10 handelt es sich um eine elektromagnetische Zahnkupplung mit radial nach innen und radial nach außen ragenden Zähnen, die ineinandergreifen.

Bei der elektromagnetisch schaltbaren Formschlusskupplung 10 kann es sich jedoch auch um jegliche andere Art von Verzahnungskupplung handeln. Wichtig ist lediglich, dass die Verbindung durch einen Formschluss hergestellt wird.

Die elektromagnetisch schaltbare Formschlusskupplung 10 umfasst eine Schaltmuffe 16, die seitlich entlang des Umfangs eine erste Verzahnung 18 aufweist.

Weiter ist die Schaltmuffe 16 drehfest auf einer ersten Welle 12 angeordnet und axial entlang dieser zwischen einer Einkupplungsposition und einer Auskupplungsposition längs einer die Welle 12 und die Schaltmuffe 16 koppelnden Verzahnung 19 verstellbar. Figur 1 zeigt die Schaltmuffe 16 in der Auskupplungsposition.

Der zweiten Welle 14 ist ein singulärer Kupplungskörper 20 zugeordnet, der drehfest mit der zweiten Welle 14 gekoppelt ist.

Der Kupplungskörper 20 weist eine zweite Verzahnung 22 auf, die entlang des Außenumfangs des Kupplungskörpers 20 angeordnet ist. Weiter ist der Kupplungskörper 20 koaxial zur ersten Welle 12 ausgerichtet.

Es ist aber auch denkbar, dass der Kupplungskörper 20 einen Teil der zweiten Welle 14 bildet und mit dieser einstückig ausgebildet ist.

Die erste Verzahnung 18 und die zweite Verzahnung 22 bilden zusammen eine Kupplungsverzahnung 24 und dienen dazu, in der Einkupplungsposition der Schaltmuffe 16 einen Formschluss zwischen der Schaltmuffe 16 und dem Kupplungskörper 20 zu bilden.

Dabei kann die aus der ersten und zweiten Verzahnung 18, 22 gebildete Kupplungsverzahnung 24 zumindest an den Zähnen der ersten Verzahnung 18 und/oder an den Zähnen der zweiten Verzahnung 22 Hinterschnitte aufweisen, die derart ausgebildet sind, dass bei einer Schaltmuffe 16 in der Einkupplungsposition und bei einer Drehmomentbeaufschlagung der Formschlusskupplung 10 ein zusätzliches Verschieben der Schaltmuffe 16 hin zum Kupplungskörper 20 stattfindet, weil die Umfangskraft in eine axiale Verschiebekraft umgesetzt wird. Dies kann beispielsweise durch sich keilförmig aufweitende Hinterschnitte erreicht werden, sodass eine Keilwirkung in Richtung Einkupplungsposition entsteht, wenn ein Drehmoment übertragen wird.

Darüber hinaus ist ein Stator 26 vorgesehen, der ein Statorgehäuse 28 umfasst und eine Antriebsspule 30, die zumindest teilweise im Statorgehäuse 28 aufgenommen ist.

Das Statorgehäuse 28 umfasst einen Gehäusetopf 32, der sich entlang des Umfangs der Antriebsspule 30 sowie entlang einer Stirnseite der Antriebsspule 30 erstreckt.

Weiter weist das Statorgehäuse 28 einen Gehäusering 34 auf, der entlang des Umfangs der Antriebsspule 30 verläuft und sich zusätzlich auf der dem Gehäusetopf 32 entgegengesetzten Stirnseite der Antriebsspule 30 erstreckt.

Die Antriebsspule 30 dient zum linearen Verstellen der Schaltmuffe 16 entlang der ersten Welle 12 in Richtung der Einkupplungsposition hin zum Kupplungskörper 20.

Alternativ ist es auch denkbar, dass die Antriebsspule 30 zur Verstellung der Schaltmuffe 16 entlang der ersten Welle 12 hin zur Auskupplungsposition der Schaltmuffe 16 dient.

Die Verstellung der Schaltmuffe 16 erfolgt über eine magnetische Kraft, die bei Bestromung der Antriebsspule 30 auf die Schaltmuffe 16 ausgeübt wird.

Um die Schaltmuffe in die Auskupplungsposition zurück zu verschieben, ist eine elastische Federeinheit 40 vorgesehen, über die die Schaltmuffe 16 in axialer Richtung verschiebbar mit der ersten Welle 12 gekoppelt ist.

Die elastische Federeinheit 40 ist dabei derart zwischen der Schaltmuffe 16 und der ersten Welle 12 angeordnet, dass eine Relativverschiebung der Schaltmuffe 16 in axialer Richtung hin zur Einkupplungsposition ein Einfedern der elastischen Federeinheit 40 zur Folge hat. Hierdurch entsteht eine Rückstellkraft, die die erste elastische Federeinheit 40 auf die Schaltmuffe 16 ausübt.

Die Rückstellkraft wirkt dabei entgegengesetzt der magnetischen Kraft der Antriebsspule 30.

Die elastische Federeinheit 40 ist innerhalb einer Ausnehmung in der Welle 12 angeordnet und drückt axial einerseits gegen eine Wand an der Welle und andererseits gegen eine an der Schaltmuffe 16 befestigte Scheibe 41.

Dementsprechend ist die elastische Federeinheit 40 in einem Raum untergebracht, der radial innenseitig durch die erste Welle 12 und radial außenseitig durch die Schaltmuffe 16 begrenzt ist.

Bei der Federeinheit 40 kann es sich bevorzugt um eine Wellenfeder oder ein Wellenfederpaket handeln.

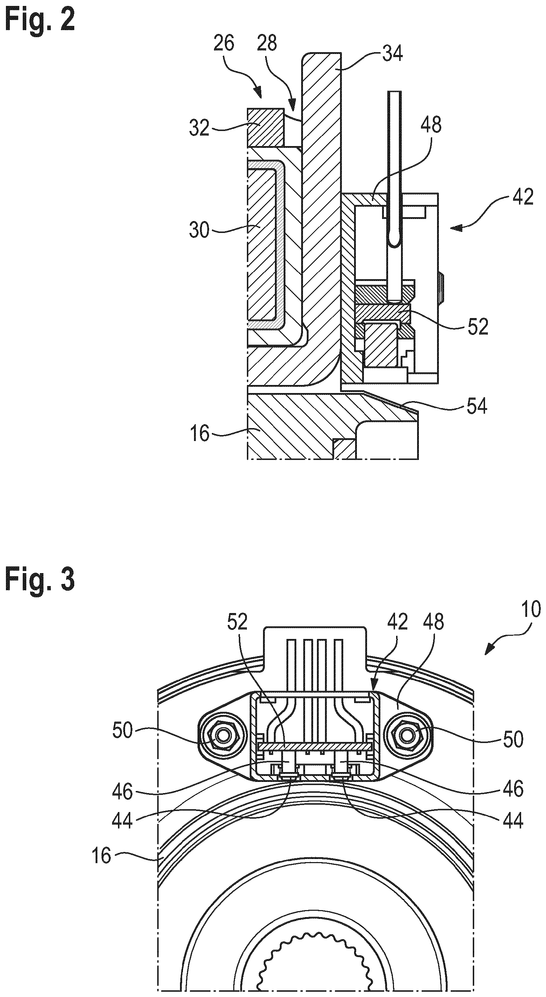

Wie insbesondere in der Detailansicht in Figur 2 zu sehen ist, umfasst die Formschlusskupplung 10 in der hier gezeigten ersten Ausführungsform außerdem eine Sensorvorrichtung 42.

Die Sensorvorrichtung 42 umfasst, wie insbesondere in Figur 3 zu sehen ist, wenigstens zwei Hall-Sensoren 44 sowie zwei die Hall-Sensoren 44 magnetisch einschließende Magnete 46, die unmittelbar an die Hall-Sensoren 44 angrenzen.

Bei den Magneten 46 handelt es sich um Permanentmagnete oder Elektromagnete, welche dazu dienen, ein stabiles Magnetfeld für die Hall-Sensoren 44 bereitzustellen.

Dafür weisen die Magnete 46 jeweils mit einem Ende zur Schaltmuffe 16 hin und sind bleibend ortsfest zu oder an den Hall-Sensoren 44 befestigt. Um einen bestmöglichen Magnetfluss zu gewährleisten, weist dabei ein Magnet 46 mit einem Pluspol und der andere Magnet 46 mit einem Minuspol zur Schaltmuffe 16 hin, d. h. sie sind gegenläufig gepolt.

In dem hier gezeigten Ausführungsbeispiel ist jedem der Hall-Sensoren 44 einer der Magnete 46 zugeordnet. Dabei grenzt, wie gesagt, der jeweilige Magnet 46 an den zugeordneten Hall-Sensor 44 an.

Dabei sind die Hall-Sensoren 44 an dem der Schaltmuffe 16 nahen Ende der jeweiligen Magnete 46 angeordnet, sodass die Hall-Sensoren 44 zwischen den zugeordneten Magneten 46 und der Schaltmuffe 16 platziert sind.

Die Sensorvorrichtung 42 ist in einem Sensorgehäuse 48 aufgenommen, welches seitlich an dem Statorgehäuse 28 befestigt wird, siehe Figur 2.

Die Befestigung des Sensorgehäuses 48 am Statorgehäuse 28 kann beispielsweise mittels Schrauben 50 geschehen.

Wie insbesondere in Figur 3 gut zu sehen ist, sind die beiden Hall-Sensoren 44 jeweils über einen der Magnete 46 an einer Platine 52 angebracht.

Dabei sind die Hall-Sensoren 44 jeweils an dem Ende der Magnete 46 befestigt, welches zur Schaltmuffe 16 weist.

Die Anordnung der Hall-Sensoren 44 zwischen den Magneten 46 und der Schaltmuffe 16 ist insbesondere deshalb vorteilhaft, da die Messgenauigkeit der Hall-Sensoren 44 sich mit steigender Entfernung verringert. Somit sollten die Hall-Sensoren 44 möglichst nahe an der Schaltmuffe 16 angeordnet sein, um die Kupplungsposition der Schaltmuffe 16 möglichst genau bestimmen zu können.

Die Magnete 46 sind nicht nur gegenpolig, sondern auch parallel zueinander angeordnet, wie in Figur 3 zu sehen ist. Dadurch kann ein definierter Magnetfluss zwischen den Magneten 46 sichergestellt werden.

Zusätzlich sind die beiden Magnete 46 auf derselben Seite der Platine 52 vorgesehen.

Um die Kupplungsposition der Schaltmuffe 16 bestimmen zu können, ist die Sensorvorrichtung 42 in einer radialen Richtung mit einem radialen Spalt beabstandet zur Schaltmuffe 16 am Statorgehäuse 28 befestigt. Bei einer Axialbewegung der Schaltmuffe 16 reduziert oder vergrößert sich der radiale Spalt, je nach Verschiebungsrichtung der Schaltmuffe 16, wie später noch erläutert wird, was eine Änderung des Magnetfelds mit sich führt, die vom Hall-Sensor 44 beziehungsweise von den Hall-Sensoren 44 detektiert wird.

Um nicht nur zwischen der Einkupplungsposition und der Auskupplungsposition unterscheiden zu können, sondern zu jeder Zeit die genaue Kupplungsposition der Schaltmuffe 16 bestimmen zu können, weist die Schaltmuffe 16 auf ihrer Außenseite eine der Sensorvorrichtung 42 gegenüberliegende Schräge 54 auf. Die Schräge 54 bildet den Detektierbereich für die Sensorvorrichtung 42 und begrenzt den radialen Spalt auf Seite der Schaltmuffe 16.

Vorzugsweise wird die Schräge 54 durch einen konisch zulaufenden axialen Rand der Schaltmuffe 16 gebildet.

Wie in Figur 1 gezeigt ist, ist der Schaltmuffe 16 nur ein einziger Kupplungskörper 20 zugeordnet, sodass die Sensorvorrichtung 42 auf der vom Kupplungskörper 20 axial entfernten Seite der Schaltmuffe 16 angeordnet sein kann.

Nachfolgend sollen die Funktionsweise und der Betrieb der Formschlusskupplung 10 sowie die Bestimmung der Kupplungsposition der Schaltmuffe 16 mittels der Sensorvorrichtung 42 beschrieben werden.

Den Ausgangszustand bildet hierbei die Auskupplungsposition der Schaltmuffe 16, wie in Figur 1 gezeigt.

Es liegt dabei kein Formschluss zwischen der ersten Verzahnung 18 der Schaltmuffe 16 und der zweiten Verzahnung 22 des Kupplungskörpers 20 vor.

Die Schaltmuffe 16 wird in diesem ausgekuppelten und geöffneten Zustand durch die elastische Federeinheit 40 gehalten, solange keinerlei äußeren Kräfte auf die Schaltmuffe 16 wirken, deren Betrag die Federkraft der Federeinheit 40 übersteigt.

Man spricht auch von einer Formschlusskupplung 10, die "normally open" ist.

Solange sich die Schaltmuffe 16 in der Auskupplungsposition befindet, verändert sich der radiale Spalt nicht und von den Hall-Sensoren 44 der Sensorvorrichtung 42 wird kein Signal erfasst.

Soll die Schaltmuffe 16 aus der Auskupplungsposition hin zum Kupplungskörper 20 verschoben werden, so muss zuerst eine ausreichende Spannung an die Antriebsspule 30 angelegt werden.

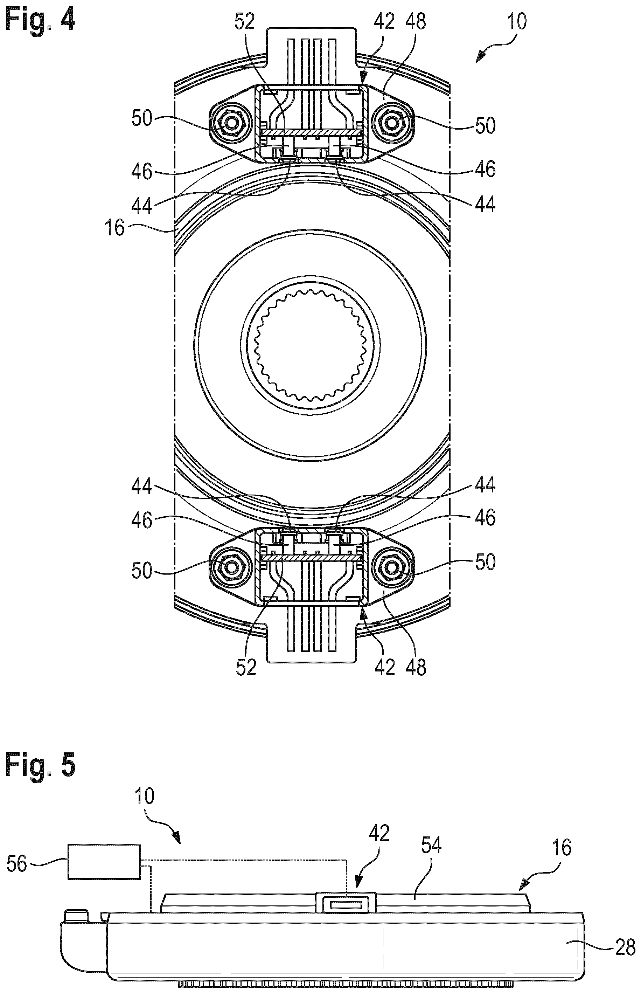

Das Bestromen der Antriebsspule 30 erfolgt dabei über eine Steuerung 56, welche für jegliche Kupplungsvorgänge verantwortlich ist und auch die Signale der Sensorvorrichtung 42 verarbeitet (siehe Figur 5).

Dementsprechend ist die Steuerung 56 sowohl mit der Antriebsspule 30 als auch mit der Sensorvorrichtung 42 verbunden, wobei die Steuerung 56 und die Sensorvorrichtung 42 zumindest signaltechnisch miteinander verbunden sind.

Die Verbindung der Steuerung 56 mit der Sensorvorrichtung 42 erfolgt vorzugsweise über die Platine 52, wobei die Sensorvorrichtung 42 mittels Kabeln, Leitungen und/oder Steckern mit der Steuerung 56 verbunden sein kann.

Das Bestromen der Antriebsspule 30 sorgt für einen magnetischen Fluss, durch den eine magnetische Kraft auf die Schaltmuffe 16 in Richtung des Kupplungskörpers 20 wirkt.

Übersteigt der Betrag der magnetischen Kraft den Betrag der Federkraft, die durch die Federeinheit 40 auf die Schaltmuffe 16 wirkt, so kommt es zu einer Bewegung der Schaltmuffe 16 hin zum Kupplungskörper 20.

Diese Verschiebung der Schaltmuffe 16 hat durch die Schräge 54 auf ihrer Außenseite zur Folge, dass sich der Abstand zwischen den Hall-Sensoren 44 und der Schräge 54 verändert, indem sich der radiale Spalt zwischen der Sensorvorrichtung 42 und der Schaltmuffe 16 reduziert.

Durch die Bewegung der Schaltmuffe 16 und die daraus entstehende Verringerung des radialen Spalts, ändert sich wiederum das Magnetfeld, was eine Änderung der Hall-Spannung verursacht, von der aus auf die Kupplungsposition der Schaltmuffe 16 geschlossen werden kann.

Damit befindet sich die Schaltmuffe 16 in der Einkupplungsposition. Bei bestromter Antriebsspule 30 wirkt dabei eine magnetische Haltekraft auf die Schaltmuffe 16.

Damit auch wirklich jede Position der Schaltmuffe 16 zwischen der Auskupplungsposition und der Einkupplungsposition erkannt werden kann, entspricht die Schräge 54 vorzugsweise dem notwendigen Hub, das heißt dem Schaltweg, der Schaltmuffe 16.

In der Einkupplungsposition greifen die erste Verzahnung 18 und die zweite Verzahnung 22 ineinander, sodass ein Formschluss zwischen der Schaltmuffe 16 und dem Kupplungskörper 20 vorliegt.

Wie bereits erwähnt, ist es möglich, dass die erste Verzahnung 18 und/oder die zweite Verzahnung 22 mit seitlichen Hinterschnitten in axialer Richtung und in Richtung der Einkupplungsposition versehen ist/sind.

Weisen die beiden Verzahnungen 18, 22 Hinterschnitte auf, so hat eine Drehmomentübertragung zwischen dem Kupplungskörper 20 und der ersten Welle 12 zur Folge, dass aufgrund der Hinterschnitte und der dadurch entstehenden Keilwirkung zwischen den kontaktierenden Zähnen eine Kraft auf die Schaltmuffe 16 in Richtung der Einkupplungsposition, also hin zum Kupplungskörper 20, entsteht.

Die auf die Schaltmuffe 16 wirkende Kraft ist dabei maßgeblich abhängig von der Geometrie der Hinterschnitte der Verzahnungen 18, 22 und dem vorliegenden Drehmoment.

Während sich die Schaltmuffe 16 in der Einkupplungsposition befindet, verändert sich der radiale Spalt nicht, sodass auch keine Änderung der Hall-Spannung von den Hall-Sensoren 44 detektiert werden kann.

Soll die Schaltmuffe 16 nun zurück in ihre Auskupplungsposition verschoben werden, so muss zunächst die magnetische Kraft, welche durch die Bestromung der Antriebsspule 30 erzeugt wird, reduziert oder aufgehoben werden.

Ist der Betrag der magnetischen Kraft, die auf die Schaltmuffe 16 wirkt, unterhalb des Betrags der Rückstellkraft durch die elastische Federeinheit 40, die auf die Schaltmuffe 16 wirkt, so hat dies eine Verschiebung der Schaltmuffe 16 aus der Einkupplungsposition zurück in die Auskupplungsposition zur Folge.

In diesem Zustand wird die Schaltmuffe 16 durch die Federkraft der elastischen Federeinheit 40 gehalten.

Beim Verschieben der Schaltmuffe 16 von der Einkupplungsposition zur Auskupplungsposition, vergrößert sich der radiale Spalt aufgrund der an der Außenseite der Schaltmuffe 16 angebrachten Schräge 54 und es wird ebenfalls eine Hall-Spannung aufgrund des sich ändernden Magnetfelds detektiert.

Nicht gezeigt in den Figuren ist eine Ausführungsform, bei der die Sensorvorrichtung 42 eine magnetische, durchgehende Kurzschlussbrücke aufweist, die an die von der Schaltmuffe 16 entfernten Enden der Magnete 46 angreift und somit die Magnete 46 miteinander verbindet und magnetisch koppelt.

Durch eine solche Kurzschlussbrücke wird der Magnetfluss zwischen den wenigstens zwei Magneten 46 gelenkt, sodass die Hall-Sensoren 44 von einem stärkeren Magnetfeld eingeschlossen werden. Somit werden die Hall-Sensoren 44 effektiv von dem durch die Antriebsspule 30 erzeugten Magnetfeld abgeschirmt, um ungewollte Änderungen des Hall-Effekts aufgrund des Magnetfelds der Antriebsspule 30 zu verhindern.

Dementsprechend besteht die Kurzschlussbrücke vorzugsweise aus einem weichmagnetischen Werkstoff, wie beispielsweise aus ferromagnetischen Metallen oder Metalloxiden.

In Figur 4 ist eine weitere Ausführungsform der Formschlusskupplung 10 zu sehen. Diese unterscheidet sich zu der in den Figuren 2 und 3 gezeigten Ausführungsform darin, dass zwei Sensorvorrichtungen 42 vorgesehen sind.

Die Ausführung der Sensorvorrichtung 42 sowie die Bestimmung der Position der Schaltmuffe 16 ändern sich dabei nicht.

Wie in Figur 4 zu sehen ist, sind die Sensorvorrichtungen 42 in Umfangsrichtung zueinander versetzt angeordnet, z. B. um 180°.

Durch eine Bestimmung der Kupplungsposition der Schaltmuffe 16 mit wenigstens zwei Sensorvorrichtungen 42 kann neben der aktuellen Kupplungsposition auch erkannt werden, ob die Schaltmuffe 16 leicht gekippt ist.

Ist dies der Fall, so kann die Steuerung 56 einen entsprechenden Steuerungsbefehl ausgeben, der die Schaltmuffe 16 wieder senkrecht zur ersten Welle 12 ausrichtet.

In Figur 5 ist die axiale Anordnung der Sensorvorrichtung 42 erkennbar.

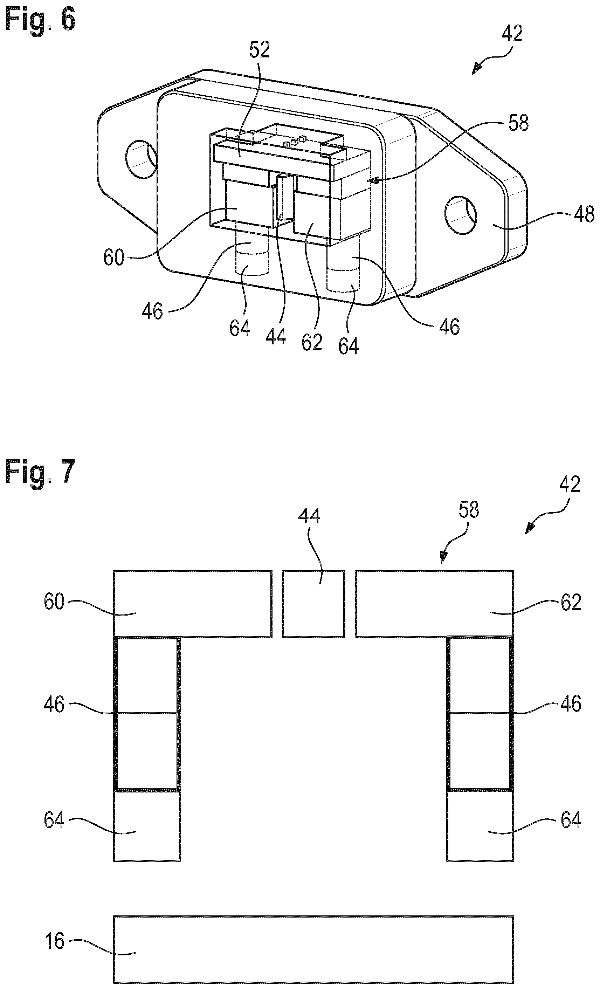

In den Figuren 6 und 7 ist eine weitere Ausführungsform der Sensorvorrichtung 42 gezeigt, die ebenfalls verwendet werden kann, um die Kupplungsposition der Schaltmuffe 16 zu bestimmen.

Die hier gezeigte Sensorvorrichtung 42 umfasst die magnetische, geteilte Kurzschlussbrücke 58. Dabei ist die magnetische Kurzschlussbrücke 58 mit den Magneten 46 magnetisch gekoppelt und grenzt an ein von der Schaltmuffe 16 entferntes Ende des jeweiligen Magneten 46 an.

Wie bereits erwähnt, dient eine solche magnetische Kurzschlussbrücke 58 dazu, den Fluss des Magnetfeldes der zwei Magnete 46 zu lenken und den Hall-Sensor 44 beziehungsweise die Hall-Sensoren 44 von dem Magnetfeld der Antriebsspule 30 abzuschirmen, da das Magnetfeld der Antriebsspule 30 zu unkontrollierten Änderungen des Hall-Effekts führen kann.

Dementsprechend kann durch eine Verwendung einer Kurzschlussbrücke 58 das vom Hall-Sensor 44 detektierte Signal verstärkt werden, sodass eine höhere Auflösung erreicht werden kann.

Bei der in den Figuren 6 und 7 gezeigten Ausführungsform ist die Kurzschlussbrücke 58 in ein erstes Brückenteil 60 und ein zweites Brückenteil 62 unterteilt.

Jedes der Brückenteile 60, 62 ist dabei einem der Magnete 46 zugeordnet und an dessen von der Schaltmuffe 16 entfernten Seite angebracht, sodass sich das jeweilige Brückenteil 60, 62 zu dem jeweils anderen Magneten 46 erstreckt.

Dabei sind die Brückenteile 60, 62 so angeordnet, dass zwischen ihnen ein Spalt entsteht, in dem der Hall-Sensor 44 angeordnet ist.

Durch die Verwendung einer solchen geteilten Kurzschlussbrücke 58 reicht es aus, lediglich einen Hall-Sensor 44 zu verwenden.

Zusätzlich zu der Kurzschlussbrücke 58 ist in der hier gezeigten Ausführungsform optional an jedem der Magnete 46 auf deren der geteilten Kurzschlussbrücke 58 entfernten Enden ein weichmagnetisches Material 64 vorgesehen.

Bei diesem weichmagnetischen Material 64 kann es sich um den gleichen weichmagnetischen Werkstoff handeln, der auch für die Kurzschlussbrücke 58 verwendet wird.

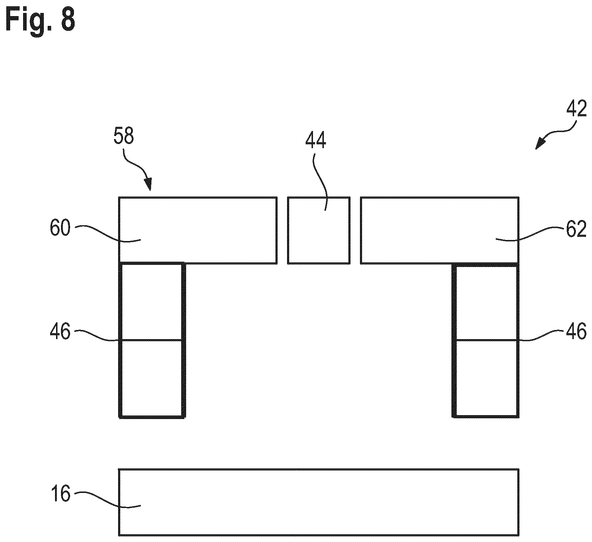

In Figur 8 ist eine Ausführungsform der Sensorvorrichtung 42 gezeigt, die im Wesentlichen der Sensorvorrichtung 42 der Figuren 6 und 7 entspricht. Der Unterschied liegt darin, dass in der Ausführungsform gemäß Figur 8 kein weichmagnetisches Material 64 an den der Kurzschlussbrücke 58 entfernen Enden der Magneten 46 vorgesehen ist.

Auch von den in den Figuren 6 bis 8 gezeigten Sensorvorrichtungen 42 können jeweils zwei Sensorvorrichtungen 42 vorgesehen sein, um auch ein eventuelles Verkippen der Schaltmuffe 16 zu detektieren und zu beheben.

Während in den Figuren eine Formschlusskupplung 10 mit einem Kupplungskörper 20 beschrieben wurde, kann die Sensorvorrichtung 42 auch bei einer zweiseitigen Formschlusskupplung 10 verbaut werden. Dafür kann die Schräge 54 der Schaltmuffe 16 vergrößert werden, sodass der Hub der Schaltmuffe 16 in beide Richtungen abgedeckt werden kann. Alternativ könnte eine V-förmige Nut am Außenumfang der Schaltmuffe vorgesehen sein.

Alternativ kann die Formschlusskupplung 10 zwei Sensorvorrichtungen 42 umfassen, welche jeweils einer axialen Seite der Schaltmuffe 16 zugeordnet sind. Dafür sollte die Schaltmuffe 16 auf beiden Seiten eine Schräge 54 aufweisen, die den Detektierbereich der jeweiligen Sensorvorrichtungen 42 definiert.

Die dargestellte Formschlusskupplung zeichnet sich dadurch aus, dass keine Anbauteile an der Schaltmuffe 16 angebracht werden müssen, um die Position der Schaltmuffe 16 detektieren zu können.

## Patentansprüche

1. Elektromagnetisch schaltbare Formschlusskupplung (10), mit
einer Schaltmuffe (16), die drehfest auf einer Welle (12) angeordnet ist und entlang der Welle (12) linear zwischen einer Einkupplungsposition und einer Auskupplungsposition verschiebbar ist,
wenigstens einem Kupplungskörper (20), der koaxial zur Welle (12) ausgerichtet ist,
einem Stator (26) mit wenigstens einer bestrombaren Antriebsspule (30) zur Verstellung der Schaltmuffe (16) entlang der Welle (12),
wobei in der Einkupplungsposition ein Formschluss zwischen der Schaltmuffe und dem Kupplungskörper (20) und damit eine Drehverbindung zwischen der Welle (12) und dem Kupplungskörper (20) vorliegt, und
einer angrenzend an die Schaltmuffe (16) angeordneten, stationären Sensorvorrichtung (42), die wenigstens einen Hall-Sensor (44) und wenigstens zwei den wenigstens einen Hall-Sensor (44) magnetisch einschließende Magnete (46) umfasst, die bleibend ortsfest zum wenigstens einen Hall-Sensor (44) sind, wobei die Magnete (46) zur Schaltmuffe (16) weisen und zueinander entgegengesetzt gepolt sind, und,
wobei die Sensorvorrichtung (42) in einer radialen Richtung mit einem radialen Spalt beabstandet zur Schaltmuffe an diese angrenzt und eine Axialbewegung der Schaltmuffe über eine Veränderung des radialen Spaltes vom Hall-Sensor (44) detektiert wird.

2. Elektromagnetisch schaltbare Formschlusskupplung (10) nach Anspruch 1, **dadurch gekennzeichnet, dass** die Schaltmuffe auf der Außenseite eine der Sensorvorrichtung (42) gegenüberliegende Schräge (54) hat, die den Detektierbereich für die Sensorvorrichtung (42) bildet und auf Seite der Schaltmuffe den Spalt begrenzt, wobei sich durch die Schräge (54) bei axialer Bewegung der Schaltmuffe die Breite des Spalts verändert.

3. Elektromagnetisch schaltbare Formschlusskupplung (10) nach Anspruch 2, **dadurch gekennzeichnet, dass** die Schräge (54) durch einen konisch zulaufenden axialen Rand der Schaltmuffe gebildet ist.

4. Elektromagnetisch schaltbare Formschlusskupplung (10) nach einem der vorhergehenden Ansprüche, **dadurch gekennzeichnet, dass** die Sensorvorrichtung (42) eine magnetische Kurzschlussbrücke (58) umfasst, die an die Magnete (46) an einem Ende angrenzt und diese magnetisch koppelt.

5. Elektromagnetisch schaltbare Formschlusskupplung (10) nach Anspruch 4, **dadurch gekennzeichnet, dass** die wenigstens zwei Magnete (46) an ihrem der Schaltmuffe (16) entfernten Ende durch die Kurzschlussbrücke (58) miteinander verbunden sind.

6. Elektromagnetisch schaltbare Formschlusskupplung (10) nach Anspruch 4 oder 5, **dadurch gekennzeichnet, dass** die Kurzschlussbrücke (58) in ein erstes Brückenteil (60) und in ein zweites Brückenteil (62) unterteilt ist, wobei das erste Brückenteil (60) und das zweite Brückenteil (62) so angeordnet sind, dass zwischen den beiden Brückenteilen (60, 62) ein Spalt entsteht, und wobei der Hall-Sensor (44) im Spalt zwischen dem ersten und dem zweiten Brückenteil (60, 62) angeordnet ist.

7. Elektromagnetisch schaltbare Formschlusskupplung (10) nach Anspruch 6, **dadurch gekennzeichnet, dass** an jedem der Magnete (46) auf dessen, der geteilten Kurzschlussbrücke (58) entfernten Ende ein weichmagnetisches Material (64) vorgesehen ist.

8. Elektromagnetisch schaltbare Formschlusskupplung (10) nach einem der Ansprüche 1 bis 5, **dadurch gekennzeichnet, dass** die Sensorvorrichtung (42) wenigstens zwei Hall-Sensoren (44) umfasst, wobei jedem der Hall-Sensoren (44) ein Magnet (46) zugeordnet ist, der an den zugeordneten Hall-Sensor (44) angrenzt.

9. Elektromagnetisch schaltbare Formschlusskupplung (10) nach Anspruch 8, **dadurch gekennzeichnet, dass** die Hall-Sensoren (44) an das der Schaltmuffe (16) nahe Ende des jeweils zugeordneten Magneten (46) angrenzen und zwischen diesem und der Schaltmuffe (16) liegen.

10. Elektromagnetisch schaltbare Formschlusskupplung (10) nach einem der vorhergehenden Ansprüche, **dadurch gekennzeichnet, dass** der wenigstens eine Hall-Sensor (44) direkt oder über einen der wenigstens zwei Magnete (46) auf einer Platine (52) angebracht ist.

11. Elektromagnetisch schaltbare Formschlusskupplung (10) nach einem der vorhergehenden Ansprüche, **dadurch gekennzeichnet, dass** die Magnete (46) parallel angeordnet sind und/oder auf derselben Seite einer Platine (52) vorgesehen sind, die auch den Hall-Sensor (44) umfasst.

12. Elektromagnetisch schaltbare Formschlusskupplung (10) nach einem der vorhergehenden Ansprüche, **dadurch gekennzeichnet, dass** die Magnete (46) Permanentmagnete oder Elektromagnete sind.

13. Elektromagnetisch schaltbare Formschlusskupplung (10) nach einem der vorhergehenden Ansprüche, **dadurch gekennzeichnet, dass** wenigstens zwei Sensorvorrichtungen (42) vorgesehen sind, wobei die wenigstens zwei Sensorvorrichtungen (42) in Umfangsrichtung zueinander versetzt angeordnet sind.

14. Elektromagnetisch schaltbare Formschlusskupplung (10) nach einem der vorhergehenden Ansprüche, **dadurch gekennzeichnet, dass** die Sensorvorrichtung (42) in einem Sensorgehäuse (48) aufgenommen ist, wobei das Sensorgehäuse (48) an einem Statorgehäuse (28) angebracht ist.

15. Elektromagnetisch schaltbare Formschlusskupplung (10) nach einem der vorhergehenden Ansprüche, **dadurch gekennzeichnet, dass** der Schaltmuffe nur ein einziger Kupplungskörper (20) zugeordnet ist und die Sensorvorrichtung (42) auf der dem Kupplungskörper (20) entfernten axialen Ende der Schaltmuffe vorhanden ist.
